# EUROPÄISCHE PATENTSCHRIFT

(11) **EP 1 190 839 B1**
(45) Veröffentlichungstag und Bekanntmachung des Hinweises auf die Patenterteilung: **23.06.2004**
(21) Anmeldenummer: 01118082.5
(22) Anmeldetag: 26.07.2001
(51) Int. Cl.: B29C 65/34

(54) **Schweissteile aus Kunststoff**
Synthetic welding elements
Eléments de soudage en matière synthétique

(30) Priorität: 21.09.2000 DE 10047475
(43) Veröffentlichungstag der Anmeldung: 27.03.2002
(73) Patentinhaber: Georg Fischer Wavin AG, 4553 Subingen (CH)
(72) Erfinder: Pylarski, Dirk, 78224 Singen (DE); Gressmann, Michael, 8222 Beringen (CH)
(74) Vertreter: Weiss, Wolfgang, Dr.

(56) Entgegenhaltungen:
- EP-A- 0 798 099
- DE-A- 4 444 914
- US-A- 5 921 587
- PATENT ABSTRACTS OF JAPAN vol. 1998, no. 09, 31. Juli 1998 (1998-07-31) & JP 10 089583 A (MITSUBISHI PLASTICS IND LTD), 10. April 1998 (1998-04-10)
- PATENT ABSTRACTS OF JAPAN vol. 1996, no. 06, 28. Juni 1996 (1996-06-28) & JP 08 035595 A (SEKISUI CHEM CO LTD), 6. Februar 1996 (1996-02-06)
- PATENT ABSTRACTS OF JAPAN vol. 1998, no. 03, 27. Februar 1998 (1998-02-27) & JP 09 292084 A (MITSUI PETROCHEM IND LTD), 11. November 1997 (1997-11-11)
- PATENT ABSTRACTS OF JAPAN vol. 018, no. 679 (M-1728), 21. Dezember 1994 (1994-12-21) & JP 06 270255 A (SEKISUI CHEM CO LTD), 27. September 1994 (1994-09-27)
- PATENT ABSTRACTS OF JAPAN vol. 1997, no. 08, 29. August 1997 (1997-08-29) & JP 09 100971 A (SEKISUI CHEM CO LTD), 15. April 1997 (1997-04-15)
- PATENT ABSTRACTS OF JAPAN vol. 017, no. 041 (M-1359), 26. Januar 1993 (1993-01-26) & JP 04 258594 A (SEKISUI CHEM CO LTD), 14. September 1992 (1992-09-14)
- PATENT ABSTRACTS OF JAPAN vol. 016, no. 519 (M-1330), 26. Oktober 1992 (1992-10-26) & JP 04 191592 A (SEKISUI CHEM CO LTD), 9. Juli 1992 (1992-07-09)

## Beschreibung

Die Erfindung betrifft rohrförmige Schweissteile mit einer an ihrer Innenfläche angeordneten Widerstandswicklung, wobei die Widerstandswicklung aus mindestens drei aufeinanderfolgend angeordnete Schweisszonen aufgebaut ist.

Schweissteile der genannten Art werden insbesondere zur Verbindung von Rohren aus thermoplastischem und/oder schweissbarem Kunststoff verwendet.

In der JP 09-292 084 ist eine Elektroschweissmuffe mit zwei mal zwei Schweisszonen offenbart. In den Schweisszonen sind die Widerstandsdrähte unabhängig voneinander angeordnet. Ein Steuergerät sorgt für die zeitliche Steuerung der Stromzufuhr zu den Schweisszonen. Die Verbindung zwischen dem Steuergerät und der Elektroschweissmuffe erfolgt mittels spezielle Leitungen, Steckverbinder und Steckdosen.

Die JP 08-035 595 zeigt Schweissteile mit unterschiedlicher Wanddicke. In den äusseren untergeordneten Bereichen ist die Wanddicke dünner als in dem zentralen Hauptbereich. Die Wicklungen in den äusseren dünneren Wandbereichen werden zuerst temporär geschweisst, bevor eine Halteklammer entfernt wird und die Wicklung in dem Hauptbereich geschweisst wird. Die Anordnung der Wicklungen in den unterschiedlichen Bereichen erfolgt in einem zweiteiligen Wickelverfahren.

In der JP 10-089 583 ist ein Sattelteil mit zwei Schweisszonen dargestellt. Die Schweisszonen sind zu einem Stromkreis zusammengeschlossen und das Sattelteil weist nur zwei Abgriffe für die Stromzufuhr auf.

In der EP 0 222 287 A1 ist ein Elektro-Schweissfitting bzw. eine Elektro-Schweissmuffe beschrieben, auf dessen Innenfläche eine Heizwendel angeordnet ist. Zum Schweissen wird der Heizwendel elektrischer Strom zugeführt, wodurch der Werkstoff des Körpers stark erwärmt und plastisch wird.

Weiterhin sind aus dem Stand der Technik zweistufige Verfahren bekannt, wobei in einer ersten Stufe die zu verschweissenden Teile vorgewärmt und in einer zweiten Stufe diese endgültig verschweisst werden.

Insbesondere ist bei zu verschweissenden grossen Muffen oder Formstücken eine entsprechend hohe Energiezufuhr erforderlich. Die handelsüblichen Schweissgeräte sind auf Leistungen beschränkt, die bei diesen grossflächigen Anwendungen zu gering sind, so dass die erforderliche Erwärmung des Materials nicht erreicht wird.

Bisher wurde dieses Problem durch Minimierung der zu verschweissenden Fläche - angepasst an das Schweissgerät - gelöst. Eine weitere Möglichkeit ist die Trennung der Schweisszone in zwei Bereiche mittels einer bifilaren Wicklung.

Diese bekannten Lösungen haben die Nachteile, dass man nur Rohre bis zu einem bestimmten Durchmesser technisch realisierbar verschweissen kann und dies nur mit sehr langen Schweisszeiten. Weiterhin entstehen in den zu verschweissenden Teilen durch ungleichmässige Erwärmungen unerwünschte Spannungen. Infolge von Beschädigungen der teuren lackisolierten Heizleitern können Kurzschlüsse auftreten.

Somit ist die Aufgabe der vorliegenden Erfindung die oben aufgeführten Nachteile zu verhindern.

Diese Aufgabe wird erfindungsgemäss dadurch gelöst, das die rohrförmige Schweissteile mindestens drei Schweisszonen aufweisen.

Die Schweissbereiche werden in Funktionsbereiche aufgeteilt, nämlich in eine Dichtschweissung und eine Schweissung zur Übertragung der Zugkraft.

Vorzugsweise ist mindestens eine Zone als zugsichernde Schweisszone und mindestens eine weitere Zone als dichtungssichernde Schweisszone ausgebildet ist.

Gemäss einer weiteren bevorzugten Ausführungsform weisen die Schweisszonen jeweils eine eigene Schweissanzeige auf. Diese Schweissanzeigen sind an sich bekannte Schweissanzeigen, wo bei erfolgtem Schweissvorgang plastischer Kunststoff aus an dem Rohr angeordneten Öffnungen austritt, bzw. ein Anzeigestift durch den sich aufbauenden Schweissdruck nach aussen sichtbar bewegt wird.

Erfindungsgemäss ist die Wicklung als monofilare Wicklung ausgebildet.

Bevorzugt weist die Wicklung mehrere Abgriffe zur Stromzuführung auf, um bereichsweise die erforderliche Energie zuzuführen.

Gemäss einer anderen erfindungsgemässen Ausführungsform ist die Wicklung mindestens einmal zur bereichsweisen Energiezufuhr unterbrochen.

Weiterhin wird die Erfindung durch ein Verfahren gelöst, wobei zeitlich versetzt als erste Schweissung die kraftaufnehmende und als zweite Schweissung die dichtende Schweissung erfolgt. Ebenso kann die Reihenfolge der Schweissung auch umgekehrt erfolgen.

Bevorzugt kann die Wicklung seriell mit einem Schweissgerät mit der erforderlichen Energie oder parallel mit mehreren Schweissgeräten mit der erforderlichen Energie versorgt werden.

Die Erfindung ist als Ausführungsbeispiel in der Zeichnung dargestellt. Es zeigen
- Fig. 1: eine dreidimensionale Ansicht einer Schweissmuffe
- Fig. 2: eine Teilansicht einer Draufsicht einer Schweissmuffe
- Fig. 3: eine Schnittansicht A-A der Fig.2

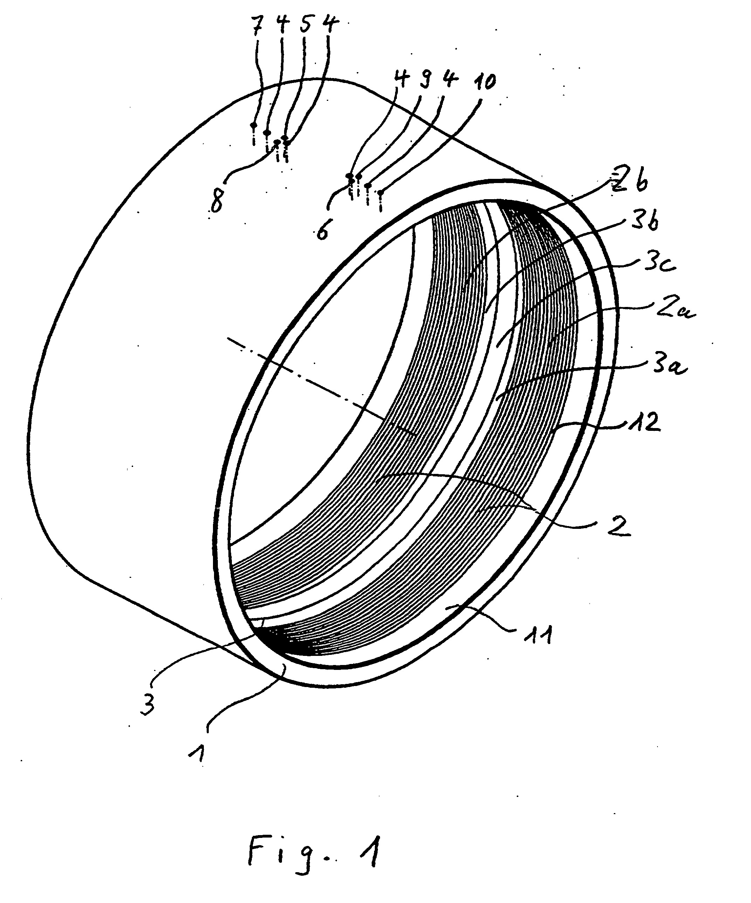

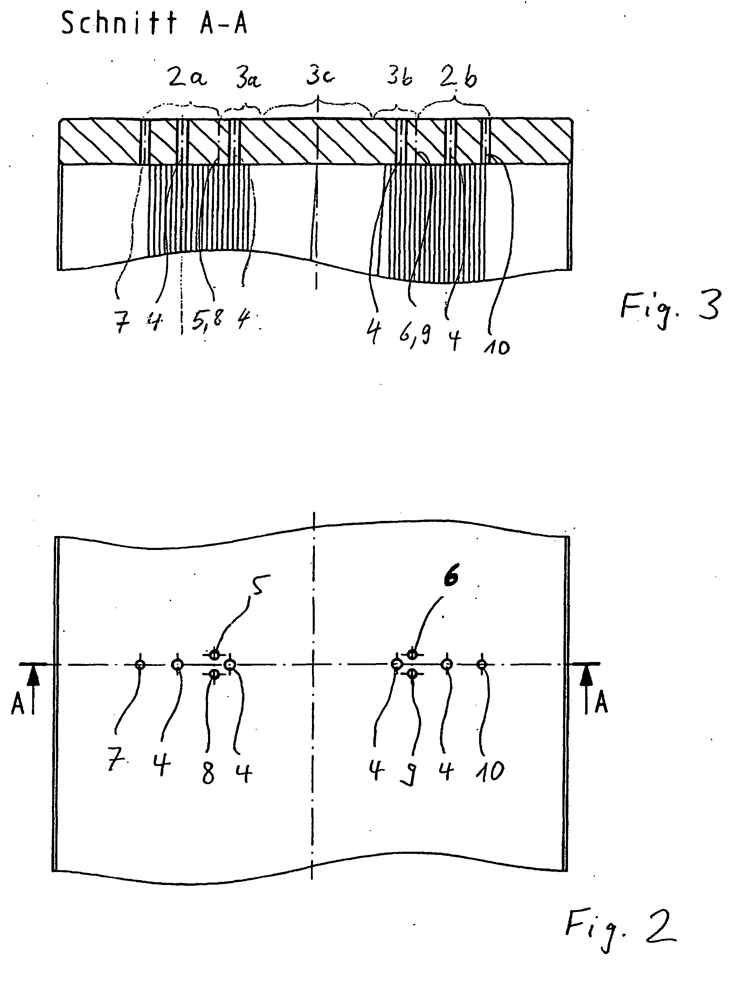

Die Figuren 1 bis 3 zeigen eine Schweissmuffe 1 mit einer an der Innenseite 11 angeordneten monofilaren Wicklung 12. Die Wicklung 12 ist in drei Bereiche 2 und 3 aufgeteilt. Die Bereiche 2a und 2b sind für die Kraftschweissung und der zwischen den Bereichen 2a und 2b angeordnete Bereich 3 ist für die Dichtschweissung vorgesehen. Der Bereich 3 ist in drei Unterbereiche 3a, 3b und 3c aufgeteilt, nämlich 3a und 3b als Dichtschweissbereiche und der Unterbereich 3c als kalter Übergangsbereich. An der Aussenseite der Schweissmuffe sind verschiedene Stecker zum Einspeisen der Energie angeordnet. Die Pins 7, 5 und 6, 10 versorgen die Bereiche für die Kraftschweissung. Die Pins 8 und 9 dienen der Dichtschweissung. Die Wicklung 12 kann ununterbrochen in einem Stück angeordnet sein, wobei jeweils ein Stecker von 8 und 5 bzw. von 6 und 9 entfällt. Ebenso ist denkbar die Wicklung 12 unterbrochen anzuordnen. Bei dieser Ausführung sind dann jeweils zwei Stecker vorgesehen.

Mit den Bezugszeichen 4 sind die Öffnungen für die Schweissanzeigen bezeichnet, die allgemeiner Stand der Technik sind.

Die Energiezufuhr zu den einzelnen Bereichen kann beliebig verteilt werden, beispielsweise durch eine Gleichverteilung, d.h. Schweisszone 2a, Schweisszone 3 und Schweisszone 2b erhalten jeweils ein Drittel der Energie oder Schweisszone 2a, Schweisszone 3 und Schweisszone 2b erhalten die Energie im Verhältnis ein Viertel zu ein Halb zu ein Viertel.

In diesem Ausführungsbeispiel sind drei Schweisszonen in bestimmter Weise angeordnet, denkbar sind aber auch je nach Anwendung beliebig viele Zonen für verschiedene Schweissarten, wie Zugverschweissung oder Dichtungsverschweissung.

Durch externe Verbindungskabel können die einzelnen Schweissbereiche 2a, 2b, 3a, 3b, 3c variabel, je nach Anwendungsbedarf bzw. der zur Verfügung stehenden Schweissgeräte verbunden werden. So ist z. B. möglich, die Bereiche 2a und 2b zu einer Schweisszone 2 zu verbinden und in einem Zyklus zu verschweissen.

Die mit der Erfindung verbundenen Vorteile bestehen insbesondere darin, dass grosse Schweissflächen realisierbar verschweisst werden können. Durch die Anwendung einer monofilen Wicklung im Dichtungsbereich ergibt sich eine optimale Sicherheit. Weiterhin ist die erfindungsgemässe Schweissmuffe mit der monofilen Wicklung einfach herzustellen. Die Möglichkeit der Unterteilung in Schweisszonen erlaubt eine Schweissung in mehrere Teilbereiche, nämlich zugsichernde und dichtungssichernde Schweisszonen. Durch die erste äussere kraftaufnehmende Schweissung und die darauf folgende Dichteschweissung wird der Spalt zwischen Muffe/Formstück und Rohr in einem frühen Stadium geschlossen.

## Patentansprüche

1. Rohrförmige Schweissteile (1) mit einer an ihrer Innenfläche (11) angeordneten Widerstandswicklung (12), wobei die Widerstandswicklung (12) aus mindestens drei aufeinanderfolgend angeordnete Schweisszonen (2,3) aufgebaut ist, **dadurch gekennzeichnet, dass** zwischen zwei äusseren Schweisszonen (2a, 2b) mit einer gleichmässigen Wicklungsdichte eine dritte Schweisszone (3) mit einer ungleichmässigen Wicklungsdichte angeordnet ist, und dass jede Schweisszone (2a, 2b, 3) jeweils mindestens zwei Abgriffe (5, 6, 7, 8, 9, 10) zur Stromversorgung aufweist.

2. Rohrförmige Schweissteile (1) nach Anspruch 1, **dadurch gekennzeichnet, dass** mindestens eine Zone (2, 2a, 2b, 3, 3a, 3b, 3c) als zugsichemde Schweisszone (2, 2a, 2b) ausgebildet ist.

3. Rohrförmige Schweissteile (1) nach Anspruch 1 oder 2, **dadurch gekennzeichnet, dass** mindestens eine Zone (2, 2a, 2b, 3, 3a, 3b, 3c) als dichtungssichemde Schweisszone (3, 3a, 3b, 3c) ausgebildet ist.

4. Rohrförmige Schweissteile (1) nach mindestens einem der Ansprüche 1, 2 oder 3, **dadurch gekennzeichnet, dass** die Schweisszonen (2, 2a, 2b, 3, 3a, 3b, 3c) jeweils eine eigene Schweissanzeige (4) aufweisen.

5. Rohrförmige Schweissteile (1) nach mindestens einem der vorhergehenden Ansprüche, **dadurch gekennzeichnet, dass** die Wicklung (12) als monofilare Wicklung ausgebildet ist.

6. Rohrförmige Schweissteile (1) nach mindestens einem der vorhergehenden Ansprüche, **dadurch gekennzeichnet, dass** die Wicklung (12) mindestens einmal unterbrochen ist.

## Claims

1. Tubular welding parts (1) with a resistance winding (12) arranged on their inner surface (11), the resistance winding (12) being made up of at least three successively arranged welding zones (2, 3), **characterized in that** arranged between two outer welding zones (2a, 2b) with an even winding density is a third welding zone (3) with an uneven winding density, and **in that** each welding zone (2a, 2b, 3) respectively has at least two taps (5, 6, 7, 8, 9, 10) for supplying power.

2. Tubular welding parts (1) according to Claim 1, **characterized in that** at least one zone (2, 2a, 2b, 3, 3a, 3b, 3c) is formed as a tension-safeguarding welding zone (2, 2a, 2b).

3. Tubular welding parts (1) according to Claim 1 or 2, **characterized in that** at least one zone (2, 2a, 2b, 3, 3a, 3b, 3c) is formed as a seal-safeguarding welding zone (3, 3a, 3b, 3c).

4. Tubular welding parts (1) according to at least one of Claims 1, 2 or 3, **characterized in that** the welding zones (2, 2a, 2b, 3, 3a, 3b, 3c) respectively have a welding indicator (4) of their own.

5. Tubular welding parts (1) according to at least one of the preceding claims, **characterized in that** the winding (12) is formed as a monofilar winding.

6. Tubular welding parts (1) according to at least one of the preceding claims, **characterized in that** the winding (12) is interrupted at least once.

## Revendications

1. Pièces de soudage (1) de forme tubulaire dotées d'un enroulement de résistance (12) sur leur surface intérieure (11), l'enroulement de résistance (12) étant constitué d'au moins trois zones de soudage (2, 3) disposées en succession, **caractérisées en ce qu'**entre deux zones extérieures de soudage (2a, 2b) dans lesquelles la densité d'enroulement est régulière est disposée une troisième zone de soudage (3) dont la densité d'enroulement est irrégulière, et **en ce que** chaque zone de soudage (2a, 2b, 3) présente au moins deux prises (5, 6, 7, 8, 9, 10) pour une alimentation en courant.

2. Pièces de soudage (1) de forme tubulaire selon la revendication 1, **caractérisées en ce qu'**au moins une zone (2, 2a, 2b, 3, 3a, 3b, 3c) est configurée comme zone de soudage (2, 2a, 2b) de reprise des tractions.

3. Pièces de soudage (1) de forme tubulaire selon les revendications 1 ou 2, **caractérisées en ce qu'**au moins une zone (2, 2a, 2b, 3, 3a, 3b, 3c) est configurée comme zone de soudage (3, 3a, 3b, 3c) qui assure l'étanchéité.

4. Pièces de soudage (1) de forme tubulaire selon au moins l'une des revendications 1, 2 ou 3, **caractérisées en ce que** chacune des zones de soudage (2, 2a, 2b, 3, 3a, 3b, 3c) présente son propre indicateur de soudage (4).

5. Pièces de soudage (1) de forme tubulaire selon au moins l'une des revendications précédentes, **caractérisées en ce que** l'enroulement (12) est configuré comme enroulement monofilaire.

6. Pièces de soudage (1) de forme tubulaire selon au moins l'une des revendications précédentes, **caractérisées en ce que** l'enroulement (12) est interrompu au moins une fois.
